# EUROPÄISCHE PATENTSCHRIFT

(11) **EP 1 459 699 B1**
(45) Veröffentlichungstag und Bekanntmachung des Hinweises auf die Patenterteilung: **07.06.2006**
(21) Anmeldenummer: 04006675.5
(22) Anmeldetag: 19.03.2004
(51) Int. Cl.: A61C 7/36

(54) **Kieferorthopädische Vorrichtung zum Vorverlagern des Unterkiefers eines Patienten**
Orthodontic appliance for forward displacement of the lower jaw of a patient
Dispositif orthodontique permettant d'avancer le maxillaire inferieur du patient

(30) Priorität: 21.03.2003 DE 10312855
(43) Veröffentlichungstag der Anmeldung: 22.09.2004
(73) Patentinhaber: Bredent Dentalgeräte und Materialien Fach- und Organisationsberatung Peter Brehm, 89250 Senden (DE)
(72) Erfinder: Sander, Christian, Dr., 89081 Ulm (DE)
(74) Vertreter: Dziewior, Joachim

(56) Entgegenhaltungen:
- US-A- 3 798 773
- US-A- 5 378 147
- US-A- 6 012 920
- US-A1- 2001 036 615

## Beschreibung

Die Erfindung betrifft eine kieferorthopädische Vorrichtung zum Vorverlagern des Unterkiefers eines Patienten, bestehend aus einem paarweise eingesetzten Verbindungsglied, welches einerseits am Oberkiefer und andererseits am Unterkiefer jeweils mittels eines Gelenkes anschliessbar und aus einer aus einem Teleskoprohr sowie einer im Teleskoprohr längsverschiebbar geführten Gleitstange bestehenden Teleskopanordnung gebildet ist.

Aus der US-A-3798773 ist eine derartige, aus einem Teleskoprohr und einer darin geführten Gleitstange bekannt, wobei endseitig am Teleskoprohr und an der Gleitstange Anschlußstücke angeordnet sind, die zur Befestigung an einem der Zahnregulierung dienenden, an auf die Zähne aufgeklebten Klammern geführten Drahtbogen dienen. Dazu ist das eine Anschlußstück am Drahtbogen des Oberkiefers und das andere Anschlußstück am Drahtbogen des Unterkiefers befestigt. Die Anbringung der Anschlußstücke an den Drahtbögen muss dabei genau erfolgen, dass die gewünschten, auf den Unterkiefer wirkenden Kräfte beim Schließen des Mundes in der erforderlichen Größe auftreten.

Derartige kieferorthopädische Vorrichtungen werden zur Behandlung unterschiedlicher Aufgaben in der Kieferorthopädie eingesetzt. Hierzu gehört unter anderem die Steigerung des Unterkieferwachstums, die Hemmung des Oberkieferwachstums, die Mesialisation der Unterkieferdentition sowie die Distalisation der Oberkiefermolaren.

Bei der Distalisation der Oberkiefermolaren mit den bisher bekannten Geräten erfolgt eine Einbringung der Kraft an der Krone mittels Bändern, was immer zu einer Kippung der Molaren führt, da die Kraft unterhalb des Schwerpunktes des Zahnes angreift. Dies führt dazu, daß zwar die Krone nach distal (hinten) bewegt wird, die Wurzel jedoch an ihrem Platz verbleibt.

Bei einer kieferorthopädischen Behandlung, die der Steigerung des Unterkieferwachstums, oder zumindest der Mesialisation der Unterkieferdentition dient, kommt es darauf an, eine gedämpfte Verbindung zwischen den Oberkiefermolaren und dem Unterkieferbogen zu schaffen. Dabei ist zu beachten, daß das Unterkieferwachstum schrittweise erfolgen muß und möglichst mit kleinen Kräften durchgeführt werden sollte. Dies erfordert eine laufende Nachjustierung, was mit den bisher bekannten Vorrichtungen aufwendig ist.

Der Erfindung liegt die Aufgabe zugrunde, eine Vorrichtung der eingangs genannten Art so zu verbessern, daß einerseits eine gedämpfte Verbindung zwischen dem Ober- und Unterkiefer gewährleistet ist, ferner die Möglichkeit einer einfachen und damit auch häufiger durchzuführenden Nachjustierung gegeben ist und darüberhinaus die Vorrichtung bedarfsweise auch vom Patienten entfernt werden kann.

Diese Aufgabe wird nach der Erfindung dadurch gelöst, daß das eine Gelenk an einem Lagergelenk ausgebildet ist, das verstell- und feststellbar auf dem Teleskoprohr angeordnet ist.

Der durch die Erfindung erreichte Vorteil besteht zunächst im wesentlichen darin, daß durch die verstellbare Anordnung des Lagerelementes auf dem Teleskoprohr ein einfaches Justieren beziehungsweise Nachjustieren der Vorrichtung möglich ist, ohne daß diese hierfür aus dem Mund des Patienten ausgebaut werden muß.

In besonders einfacher Ausgestaltung der Erfindung ist hierzu das Teleskoprohr mit einem Außengewinde und das Lagerelement mit einem hierzu korrespondierenden Innengewinde versehen. Das Nachjustieren kann dadurch allein durch Verdrehen des Teleskoprohres vorgenommen werden.

Um dies zu vereinfachen, hat es sich als vorteilhaft erwiesen, wenn das Teleskoprohr an seinem der Gleitstange abgewandten Ende stirnseitig mit einem Verstelleingriff für ein Werkzeug versehen ist. Dies kann in einfachster Ausgestaltung ein Schlitz für einen Schraubendreher, aber auch beispielsweise ein Sechskant für einen Imbus-Schlüssel sein.

In einer weiter vorteilhaften Ausgestaltung der Erfindung ist am Lagerelement ein Gelenkkopf angeordnet, der mit einer Durchgangsbohrung zur Befestigung am Kiefer vorgesehen ist und der durch einen Kugelkopf beweglich am Lagerelement angeschlossen ist. Die Durchgangsbohrung kann beispielsweise dazu dienen, die Anbringung am Bogendraht einer "festsitzenden Spange" vorzunehmen. Der Kugelkopf wird dabei in vorteilhafter Ausgestaltung in einer Aussparung des Lagerelements kraft- und/oder reibschlüssig gehalten, wodurch die Möglichkeit besteht, den Kugelkopf aus dem Lagerelement - auch durch den Patienten selbst - auszuhängen, sofern dies im Einzelfall notwendig werden sollte.

Um dies zu ermöglichen, kann das Lagerelement aus elastisch nachgiebigen Kunststoff bestehen oder in der Aussparung ein den Kugelkopf umgreifender, elastischer Einsatz vorgesehen sein.

Um eine Dämpfung der Verbindung zu erreichen, ist im Rahmen der Erfindung vorgesehen, daß das in das Teleskoprohr ragende Ende der Gleitstange über ein Federelement am Boden des Teleskoprohrs abgestützt ist. In besonders einfacher Ausgestaltung kann das Federelement als Schraubenfeder ausgebildet sein.

Darüber hinaus ist im Rahmen der Erfindung noch vorgesehen, daß das dem Teleskoprohr abgewandte Ende der Gleitstange bogenförmig ausgebildet ist, wobei am Bogenende eine Querbohrung als Anschlußelement am Kiefer vorgesehen ist. Auch diese Querbohrung kann beispielsweise wiederum der Einhängung in einen Bogendraht dienen.

Schließlich kann die die Teleskopanordnung in an sich bekannter Weise ein oder mehrere Teleskoprohre aufweisen.

Im folgenden wird die Erfindung an einem in der Zeichnung dargestellten Ausführungsbeispiel näher erläutert; es zeigen:

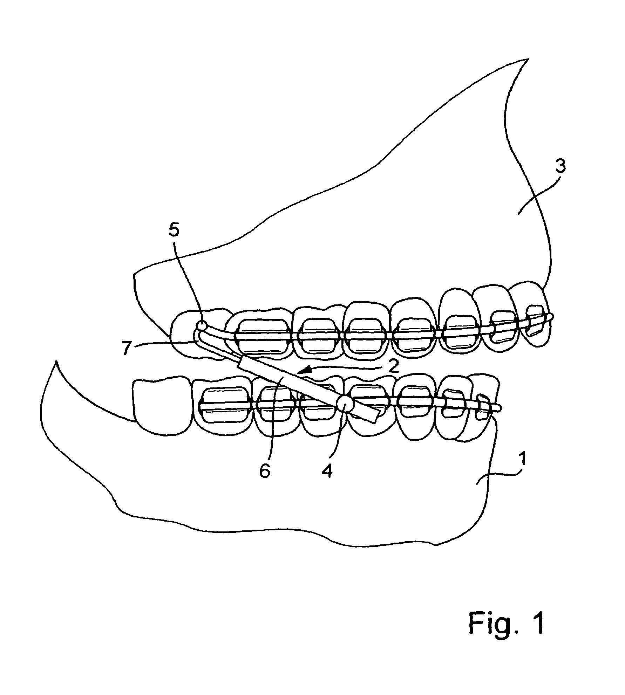

- Fig. 1: eine schematische Darstellung eines Ober- und Unterkiefers mit einer festsitzenden Spange und der daran angebrachten erfindungsgemäßen kieferorthopädischen Vorrichtung,
- Fig. 2: eine Detaildarstellung der kieferorthopädischen Vorrichtung
- Fig. 3: das Lagerelement der kieferorthopädischen Vorrichtung,
- Fig. 4: eine der Figur 2 entsprechende Darstellung einer weiteren Ausgestaltung der Erfindung.

Die in der Zeichnung dargestellte kieferorthopädische Vorrichtung dient insbesondere der Vorverlagerung des Unterkiefers 1 eines Patienten mittels eines paarweise eingesetzten Verbindungsgliedes 2. Dieses Verbindungsglied 2 ist einerseits am Oberkiefer 3 und andererseits am Unterkiefer 1 jeweils mittels eines Gelenkes 4,5 angeschlossen. Im einzelnen besteht das Verbindungsglied 2 aus einem Teleskoprohr 6 sowie einer im Teleskoprohr 6 längsverschiebbar geführten Gleitstange 7.

Das eine der beiden Gelenke 4 ist dabei an einem Lagerelement 8 ausgebildet, das verstell- und feststellbar auf dem Teleskoprohr 6 angeordnet ist.

Dazu ist das Teleskoprohr 6 mit einem Außengewinde versehen, auf das das Lagerelement 8 mit einem hierzu korrespondierenden Innengewinde aufgeschraubt ist. Durch eine Verdrehung des Teleskoprohres 6 um seine Längsachse kann somit die Position des Lagerelementes 8 auf dem Teleskoprohr 6 in Längsrichtung verstellt werden. Hierzu ist das Teleskoprohr 6 an seinem der Gleitstange 7 abgewandten Ende stirnseitig mit einem Verstelleingriff 9 für ein Werkzeug versehen, also beispielsweise mit einem Schlitz, in den ein Schraubendreher eingreifen kann.

Am Lagerelement 8 ist ein Gelenkkopf 10 angeordnet, der mit einer Durchgangsbohrung 11 versehen ist, über die der Gelenkkopf 10 beispielsweise am Bogendraht einer "festsitzenden Spange" angeschlossen werden kann. Weiter weist der Gelenkkopf 10 einen Kugelkopf 12 auf, der beweglich am Lagerelement 8 angeschlossen ist.

Im einzelnen ist der Kugelkopf 12 in einer Aussparung des Lagerelementes 8 kraft- und/oder reibschlüssig gehalten, so daß die Möglichkeit besteht, den Kugelkopf 12 aus der Aussparung herauszuführen, soweit dies im Einzelfall erforderlich ist. Dies kann auch durch den Patienten selbst beispielsweise im Falle eines Unfalles oder eines Unwohlseins vorgenommen werden. Dazu kann das Lagerelement 8 beipielsweise aus einem elastisch nachgiebigen Kunststoff bestehen oder aber in der Aussparung ein den Kugelkopf 12 umgreifender elastischer Einsatz vorgesehen sein.

Das in das Teleskoprohr 6 ragende Ende der Gleitstange 7 ist über ein Federelement 13 am Boden des Teleskoprohrs 6 abgestützt, wodurch sich eine gedämpfte Verbindung zwischen dem Ober- und Unterkiefer 1,3 ergibt. Dieses Federelement 13 ist in einfachster Ausgestaltung als Schraubenfeder ausgebildet.

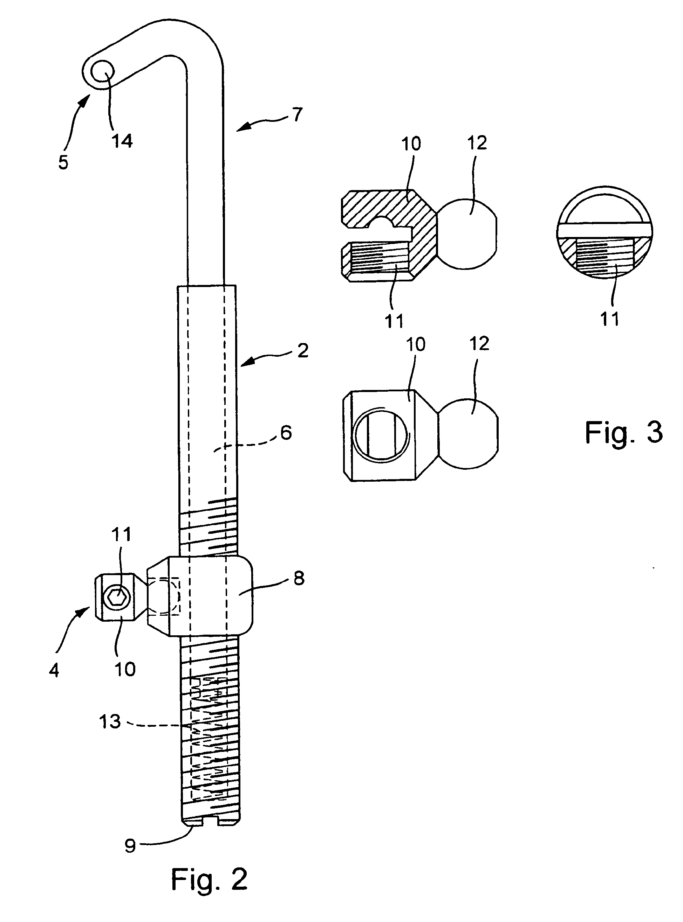

wie sich weiter insbesondere aus der Figur 2 ersehen läßt, ist das dem Teleskoprohr 6 abgewandte Ende der Gleitstange 7 bogenförmig ausgebildet, wobei am Bogenende eine Querbohrung 14 als Anschlußelement am Kiefer 3 vorgesehen ist.

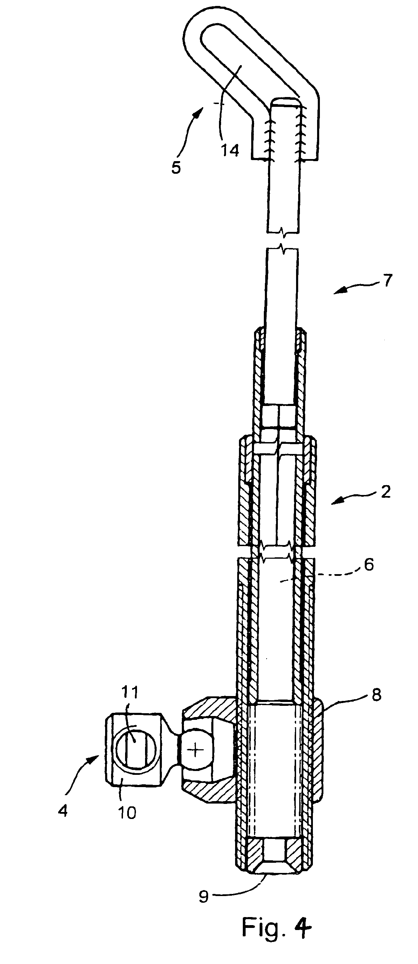

In Fig. 4 ist schließlich noch angedeutet, daß die Teleskopanordnung nicht nur ein, sondern auch mehrere Teleskoprohre 6 aufweisen kann.

## Patentansprüche

1. Kieferorthopädische Vorrichtung zum Vorverlagern des Unterkiefers (1) eines Patienten, bestehend aus einem paarweise eingesetzten Verbindungsglied (2), welches einerseits am Oberkiefer (3) und andererseits am Unterkiefer (1) jeweils mittels eines Gelenkes (4,5) anschliessbar und aus einer aus Teleskoprohr (6) sowie einer im Teleskoprohr (6) längsverschiebbar geführten Gleitstange (7) bestehenden Teleskopanordnung gebildet ist, **dadurch gekennzeichnet, daß** das eine Gelenk (4) an einem Lagerelement (8) ausgebildet ist, das verstell- und feststellbar auf dem Teleskoprohr (6) angeordnet ist.

2. Vorrichtung nach Anspruch 1, **dadurch gekennzeichnet, daß** das Teleskoprohr (6) mit einem Außengewinde und das Lagerelement (8) mit einem hierzu korrespondierenden Innengewinde versehen ist.

3. Vorrichtung nach Anspruch 2, **dadurch gekennzeichnet, daß** das Teleskoprohr (6) an seinem der Gleitstange (7) abgewandten Ende stirnseitig mit einem Verstelleingriff (9) für ein Werkzeug versehen ist.

4. Vorrichtung nach einem der Ansprüche 1 bis 3, **dadurch gekennzeichnet, daß** am Lagerelement (8) ein Gelenkkopf (10) angeordnet ist, der mit einer Durchgangsbohrung (11) zur Befestigung am Kiefer (1) versehen ist und der durch einen Kugelkopf (12) beweglich am Lagerelement (8) angeschlossen ist.

5. Vorrichtung nach Anspruch 4, **dadurch gekennzeichnet, daß** der Kugelkopf (12) in einer Aussparung des Lagerelements (8) kraft- und/oder reibschlüssig gehalten ist.

6. Vorrichtung nach Anspruch 5, **dadurch gekennzeichnet, daß** das Lagerelement (8) aus elastisch nachgiebigem Kunststoff besteht oder in der Aussparung ein den Kugelkopf (12) umgreifender, elastischer Einsatz vorgesehen ist.

7. Vorrichtung nach einem der Ansprüche 1 bis 6, **dadurch gekennzeichnet, daß** das in das Teleskoprohr (6) ragende Ende der Gleitstange (7) über ein Federelement (13) am Boden des Teleskoprohrs (6) abgestützt ist.

8. Vorrichtung nach Anspruch 7, **dadurch gekennzeichnet, daß** das Federelement (13) als Schraubenfeder ausgebildet ist.

9. Vorrichtung nach einem der Ansprüche 1 bis 8, **dadurch gekennzeichnet, daß** das dem Teleskoprohr (6) abgewandte Ende der Gleitstange (7) bogenförmig ausgebildet ist, wobei am Bogenende eine Querbohrung (14) als Anschlußelement am Kiefer vorgesehen ist.

10. Vorrichtung nach einem der Ansprüche 1 bis 9, **dadurch gekennzeichnet, daß** die Teleskopanordnung ein oder mehrere Teleskoprohre (6) aufweist.

## Claims

1. Orthodontic device for forward displacement of the lower jaw (1) of a patient, consisting of a connecting member (2) used in pairs which can be connected in each case by means of a joint (4, 5) to the upper jaw (3) on the one hand and to the lower jaw (1) on the other hand and is formed from a telescopic arrangement consisting of a telescopic tube (6) and also a sliding rod (7) guided longitudinally displaceable in the telescopic tube (6), **characterized in that** a joint (4) is formed on a bearing element (8) which is arranged adjustable and fixable on the telescopic tube (6).

2. Device according to claim 1, **characterized in that** the telescopic tube (6) is provided with an external thread and the bearing element (8) with an internal thread corresponding thereto.

3. Device according to claim 1, **characterized in that** the face of the telescopic tube (6) is provided with an adjustment contact (9) for a tool at its end facing away from the sliding rod (7).

4. Device according to one of claims 1 to 3, **characterized in that** there is arranged on the bearing element (8) a joint head (10) which is provided with a through bore (11) for attachment to the jaw (1) and which is movably attached to the bearing element (8) by a ball head (12).

5. Device according to claim 4, **characterized in that** the ball head (12) is held in non-positive and/or frictional engagement in a recess of the bearing element (8).

6. Device according to claim 5, **characterized in that** the bearing element consists of elastically resilient plastic, or an elastic insert gripping round the ball head (12) can be provided in the recess.

7. Device according to one of claims 1 to 6, **characterized in that** the end of the sliding rod (7) projecting into the telescopic tube (6) rests on the base of the telescopic tube (6) via a spring element (13).

8. Device according to claim 7, **characterized in that** the spring element (13) is formed as a helical spring.

9. Device according to one of claims 1 to 8, **characterized in that** the end of the sliding rod (7) facing away from the telescopic tube (6) is formed curved, wherein a cross-bore (14) is provided at the curve end as connector to the jaw.

10. Device according to one of claims 1 to 9, **characterized in that** the telescopic arrangement has one or more telescopic tubes (6).

## Revendications

1. Dispositif d'orthopédie maxillaire pour avancer la mâchoire inférieure (1) d'un patient, constitué d'un organe de liaison (2) qui est mis en oeuvre par paire et qui peut être relié, d'une part, à la mâchoire supérieure (3) et, d'autre part, à la mâchoire inférieure (1) à chaque fois au moyen d'une articulation (4, 5) et est formé par un agencement télescopique constitué d'un tube télescopique (6) et d'une tige coulissante (7) guidée en translation longitudinale dans le tube télescopique (6), **caractérisé en ce que** l'une des articulations (4) est réalisée au niveau d'un élément d'appui (8) disposé sur le tube télescopique (6) avec la possibilité d'être réglé et bloqué.

2. Dispositif selon la revendication 1, **caractérisé en ce que** le tube télescopique (6) est pourvu d'un filetage extérieur et l'élément d'appui (8) d'un filetage intérieur correspondant.

3. Dispositif selon la revendication 2, **caractérisé en ce que**, à son extrémité orientée à l'opposé de la tige coulissante (7), le tube télescopique (6) est muni frontalement d'une empreinte (9) pour appliquer un outil.

4. Dispositif selon une des revendications 1 à 3,
**caractérisé en ce que** sur l'élément d'appui (8) est disposée une tête d'articulation (10) qui est pourvue d'un perçage débouchant (11) pour la fixation à la mâchoire (1) et qui est reliée de manière mobile à l'élément d'appui (8) par l'intermédiaire d'une tête sphérique (12).

5. Dispositif selon la revendication 4, **caractérisé en ce que** la tête sphérique (12) est maintenue dans un évidement de l'élément d'appui (8) par conjugaison de forces et/ou par friction.

6. Dispositif selon la revendication 5, **caractérisé en ce que** l'élément d'appui (8) est réalisé en matière synthétique à souplesse élastique ou un insert élastique entourant la tête sphérique (12) est prévu dans l'évidement.

7. Dispositif selon une des revendications 1 à 6,
**caractérisé en ce que** l'extrémité de la tige coulissante (7) qui pénètre dans le tube télescopique (6) prend appui au fond du tube télescopique (6) par l'intermédiaire d'un élément à ressort (13).

8. Dispositif selon la revendication 7, **caractérisé en ce que** l'élément à ressort (13) est conformé en ressort hélicoïdal.

9. Dispositif selon une des revendications 1 à 8,
**caractérisé en ce que** l'extrémité de la tige coulissante (7) orientée à l'opposé du tube télescopique (6) est conformée en arc, un perçage transversal (14) étant prévu à l'extrémité de l'arc à titre d'élément de raccordement avec la mâchoire.

10. Dispositif selon une des revendications 1 à 9, **caractérisé en ce que** l'agencement télescopique comporte un ou plusieurs tubes télescopiques (6).
